# EUROPÄISCHE PATENTSCHRIFT

(11) **EP 2 115 435 B1**
(45) Veröffentlichungstag und Bekanntmachung des Hinweises auf die Patenterteilung: **05.05.2021**
(21) Anmeldenummer: 08706845.8
(22) Anmeldetag: 01.02.2008
(51) Int. Cl.: G01N 21/95, G01N 21/66, H02S 50/10

(54) **VERFAHREN UND ANORDNUNG ZUR DETEKTION MECHANISCHER DEFEKTE EINES HALBLEITER-BAUELEMENTS, INSBESONDERE EINER SOLARZELLE ODER SOLARZELLEN-ANORDNUNG**
METHOD AND ARRANGEMENT FOR DETECTING MECHANICAL DEFECTS IN A SEMICONDUCTOR COMPONENT, IN PARTICULAR A SOLAR CELL OR SOLAR CELL ARRANGEMENT
PROCÉDÉ ET AGENCEMENT POUR LA DÉTECTION DE DÉFAUTS MÉCANIQUES D'UN COMPOSANT SEMI-CONDUCTEUR, NOTAMMENT D'UNE PILE SOLAIRE OU D'UN AGENCEMENT DE PILES SOLAIRES

(30) Priorität: 09.02.2007 DE 102007007140
(43) Veröffentlichungstag der Anmeldung: 11.11.2009
(60) Teilanmeldung: 19162255.4
(73) Patentinhaber: Airbus Defence and Space GmbH, 82024 Taufkirchen (DE)
(72) Erfinder: ANDREEV, Thomas, 85521 Ottobrunn (DE); ZIMMERMANN, Claus, 81371 München (DE)
(74) Vertreter: Schicker, Silvia
(86) Internationale Anmeldenummer: PCT/DE2008/000180
(87) Internationale Veröffentlichungsnummer: WO 2008/095467

(56) Entgegenhaltungen:
- EP-A- 1 416 288
- WO-A-2007/128060
- US-A1- 2005 252 545
- US-B1- 6 225 640
- TAKAHASHI Y ET AL: ""Luminoscopy"-novel tool for the diagnosis of crystalline silicon solar cells and modules utilizing electroluminescence" CONFERENCE RECORD OF THE 2006 IEEE 4TH WORLD CONFERENCE ON PHOTOVOLTAIC ENERGY CONVERSION (IEEE CAT. NO. 06CH37747) IEEE PISCATAWAY, NJ, USA, [Online] Bd. 1, Mai 2006 (2006-05), Seiten 924-927, XP002480020 ISBN: 1-4244-0016-3 Gefunden im Internet: URL:http://ieeexplore.ieee.org/iel5/405952 7/4059528/04059780.pdf?tp=&arnumber=405978 0&isnumber=4059528> [gefunden am 2008-05-13]

## Beschreibung

Die vorliegende Erfindung betrifft ein Verfahren zur Detektion mechanischer Defekte eines Halbleiter-Bauelements, insbesondere einer Solarzelle oder Solarzellen-Anordnung, gemäß Anspruch 1 und eine entsprechende Anordnung gemäß Anspruch 11, sowie die Verwendung gemäß Anspruch 14.

Vor allem bei Solargeneratoren für Satelliten kommt der Detektion mechanischer Defekte in den verwendeten Solarzellen vor dem Einsatz im Orbit eine große Bedeutung zu. Mechanische Defekte bzw. Zellfehler, wie Brüche, können nämlich hauptsächlich bedingt durch die Thermalzyklen im Orbit (90 Eclipsephasen pro Jahr in einem geostationären Orbit) weiter wachsen und sich extrem negativ auf die Zuverlässigkeit der Solargeneratoren auswirken. Angestrebt wird daher eine 100-% Kontrolle der Zellen auf mechanische Defekte, vor einer Auslieferung als auch über alle Produktionsschritte hinweg, um defekte Zellen möglichst frühzeitig austauschen zu können, und um zu vermeiden, dass defekte Zellen in einem Solargenerator verwendet werden. Dies gilt selbstverständlich auch für terrestrische Solarzellen und Module, auch wenn diese im Unterschied zu den Solarzellen eines Satelliten im Orbit leichter ausgetauscht werden können.

Derzeit werden mechanische Zellfehler in Solarzellen aus indirekten Halbleitern wie Silizium durch eine visuelle Zellinspektion detektiert. Ein trainiertes Auge kann durch Betrachten der Solarzellen unter geeigneten Beleuchtungsbedingungen Zellfehler im gespiegelten Licht anhand von Lichteffekten erkennen, die durch einen leichten Höhenversatz entlang des Zellbruchs hervorgerufen werden. Da die visuelle Zellinspektion zeitaufwendig und entsprechend teuer ist, werden Anstrengungen unternommen, dieses Verfahren zu automatisieren, beispielsweise durch eine phasenmessende Deflektrometrie. Es wurde auch schon versucht, externes Licht anderer Wellenlängen zu verwenden, um eine größere Eindringtiefe zu erzielen, oder Brüche anhand ihres Einflusses auf die Ausbreitung von Wärme zu detektieren, beispielsweise mittels thermografischer Verfahren. Eine Übersicht über die Detektion mechanischer Defekte in Solarzellen findet sich in der Veröffentlichung "Utilizing lateral current spreading in multijunction solar cells: An alternative approach to detecting mechanical defects", C. G. Zimmermann, J. Appl. Phys. 100, 023714, 2006.

Die EP 1 416 288 B1 beschreibt ein Verfahren zur optischen Detektion mechanischer Defekte in Halbleiter-Bauelementen, insbesondere Solarzellen-Anordnungen, die zumindest einen pn-Übergang und zumindest eine Halbleiterschicht aus einem Halbleitermaterial mit direktem Bandübergang aufweisen. Durch Betreiben des pn-Übergangs in Durchlassrichtung wird das aktive Strahlungsverhalten beeinflusst, das dann zur Detektion mechanischer Defekte ausgewertet werden kann. Im Unterschied zu den eingangs erläuterten Inspektionsverfahren wird also das Bauelement nicht passiv bestrahlt, sondern vielmehr aktiv das Strahlungsverhalten des Bauelements selbst angeregt. Das Strahlungsverhalten wird durch die strahlende Rekombination von in den in Durchlassrichtung gepolten pn-Übergang induzierten Ladungsträgern am direkten Bandübergang beeinflusst, was laut der EP 1 416 288 B1 bei Halbleitermaterial wie Germanium mit indirektem Bandübergang nicht möglich ist, da darin keine ausreichende strahlende Rekombination von Ladungsträgern erfolgt.

In der Veröffentlichung ""Luminoscopy"-Novel Tool for the Diagnosis of Crystalline Silicon solar cells and Modules Utilizing Electroluminescence" (Takahashi Y. et al., IEEE, Cat. No. 06CH37747, Mai 2006) ist eine Anordnung und ein Verfahren zur Detektion von Rissen und Defekten in Solarzellen aus kristallinem Silizium gezeigt. An die Solarzelle wird eine Spannung in Durchlassrichtung angelegt, und das von der Solarzelle emittierte Infrarotlicht wird von einer CCD Kamera in einer Dunkelkammer erfasst und anschließend in einer Auswerteeinheit ausgewertet. Auf diese Weise kann anhand der Abnahme der Intensität der Elektrolumineszenz in dem aufgenommenen Bild auf Defekte und Risse in der Solarzelle zurückgeschlossen werden.

Eine Aufgabe der vorliegenden Erfindung ist es nun, eine Möglichkeit zur Detektion von Defekten in Halbleiter-Bauelementen mit indirektem Halbleitermaterial, beispielsweise Silizium-basierten Solarzellen oder Solarzellen-Anordnungen, bereitzustellen.

Diese Aufgabe wird durch ein Verfahren zur Detektion mechanischer Defekte eines Halbleiter-Bauelements, insbesondere einer Solarzelle oder Solarzellen-Anordnung, mit den Merkmalen von Anspruch 1 und durch eine entsprechende Anordnung mit den Merkmalen von Anspruch 11 gelöst.

Weitere Ausgestaltungen der Erfindung ergeben sich aus den abhängigen Ansprüchen.

Die vorliegende Erfindung basiert auf der Erkenntnis, dass auch indirekte Halbleiter wie Silizium unter bestimmten Bedingungen ein auswertbares Strahlungsverhalten besitzen. Aus der Veröffentlichung "Photographic surveying of minority carrier diffusion length in polycrystalline silicon solar cells by electroluminescence", T. Fuyuki, H. Kondo, T.Yamazaki, Y. Takahashi und Y. Uraoka, Appl. Phys. Lett. 86, 262108, 2005, geht hervor, dass die Minoritätsträgerdiffusionslänge in polykristallinem Silizium auf der Basis von Elektrolumineszenz ermittelt werden kann und somit auch indirekte Halbleiter genügend auswertbare Elektrolumineszenz abgeben. Nach der Erfindung wird nun diese Erkenntnis genutzt, um das aus der EP 1 416 288 B1 bekannte Verfahren durch entsprechende Modifikation auch für die Detektion von mechanischen Defekten in Halbleiter-Bauelementen mit indirektem Halbleitermaterial verwenden zu können.

Mit der Erfindung können daher mechanische Defekte in einem HalbleiterBauelement mit einem pn-Übergang, das auf einem indirekten Halbleitermaterial wie beispielsweise Silizium basiert, dadurch detektiert werden, dass eine Spannung an diesem Halbleiter-Bauelement in Durchlassrichtung des pn-Übergangs angelegt werden kann, wodurch das Halbleiter-Bauelement zur Abgabe von elektromagnetischer Strahlung angeregt wird. Auf Grund des indirekten Bandübergangs ist die auftretende Elektrolumineszenz um Größenordnungen schwächer als in direkten Halbleitern und daher ist zur optischen Erfassung der von den aktiven Schichten im Halbleiter emittierten Strahlung ein geeigneter optischer Sensor, wie z.B. eine CCD Kamera notwendig. Diese muß an den Wellenlängenbereich der emittierten Strahlung angepasst sein und über eine angemessene Beobachtungszeit integriert, eine geeignete Empfindlichkeit besitzen. Für Halbleiter die auf Si oder Ge basieren und von großer praktische Relevanz sind liegt die emittierte Strahlung im infraroten Wellenlängenbereich. In diesem Fall kann durch einen Infrarotfilter sämtliches sichtbares Licht ausgeblendet werden, wodurch auch relativ unempfindlichere Detektoren verwendet werden können und die Defekt-Detektion unter Umgebungslicht möglich wird. Im allgemeineren Fall können geeignete (Bandpass)filter dazu verwendet werden, die Strahlung eines bestimmten pn Übergangs zu isolieren und nur diese Halbleiterschichten auf Defekte zu überprüfen. Unter optischer Erfassung im Sinne der vorliegenden Erfindung ist dabei insbesondere die Ortsauflösung der Detektion der vom Halbleiter-Bauelement emittierten elektromagnetischen Strahlung zu verstehen.

Die Analyse des Strahlungsverhaltens erfolgt dabei derart, dass das Strahlungsverhalten der Halbleiterschicht auf abrupte, im wesentlichen eindimensionale Intensitätsänderungen entlang der Halbleiterschicht untersucht wird und die detektierten Intensitätsänderungen als mechanische Defekte des Halbleiter-Bauelements gekennzeichnet werden. Eine solche Analyse kann automatisch durch entsprechende Bildverarbeitungssysteme oder Strahlungsintensitätsdetektoren erfolgen. Es wird also hier nicht lediglich qualitativ das globale Strahlungsverhalten betrachtet (Strahlung vorhanden oder nicht vorhanden), sondern es wird lokal der Intensitätsverlauf des Strahlungsverhaltens entlang des Bauelements bzw. entlang der Halbleiterschicht mit indirektem Bandübergang untersucht. Auf diese Weise können lokale Defekte erkannt werden, die die Funktionsfähigkeit des Bauelements in gewissen Teilbereichen beeinträchtigen oder in sonstiger Weise stören können. Eine abrupte, im wesentlichen eindimensional ausgedehnte Intensitätsänderung lässt auf einen mechanischen Defekt wie einen Bruch einer Halbleiterschicht schließen.

Grundsätzlich kann das Verfahren aber auch angewendet werden, um lokale Eintrübungen, Degradationen oder ähnliches, beispielsweise in Deckelgläsern und Deckschichten von Solarzellen oder ähnliches zu detektieren. Diese können sich dann aber beispielsweise als Intensitätsänderung zweidimensionaler Ausdehnung im Strahlungsverhalten auswirken und entsprechend detektierbar sein.

Die vorliegende Erfindung bietet den Vorteil, dass eine wesentliche Verbesserung der Detektion mechanischer Fehler in planaren Halbleiter-Bauelementen möglich ist, die insbesondere aus einem Halbleitermaterial mit indirektem Bandübergang wie Silizium bestehen. Gegenüber der visuellen Zellinspektion, die insbesondere bei texturierten Silizium-Solarzellen an ihre Grenzen stößt, können Fehler zu nahezu 100 % erkannt werden (gegenüber einer visuellen Erkennungsrate von in der Regel weniger als 50 %). Weiterhin ist die Inspektion personenunabhängig und reproduzierbar und ermöglicht eine eindeutige Fehlerdokumentation. Zusätzlich bringt das Verfahren eine Zeitersparnis mit sich und lässt sich automatisieren.

Gemäß einer Ausführungsform der Erfindung ist nun ein Verfahren zur Detektion mechanischer Defekte eines Halbleiter-Bauelements, insbesondere einer Solarzelle oder Solarzellen-Anordnung, mit zumindest einem pn-Übergang in einem Halbleitermaterial mit indirektem Bandübergang vorgesehen, wobei
- an den zumindest einen pn-Übergang eine Spannung zum Betrieb des pn-Übergangs in Durchlassrichtung angelegt wird,
- das durch die angelegte Spannung erzeugte Strahlungsverhalten der Halbleiterschicht zumindest für Teilbereiche der Halbleiterschicht mittels eines Filters derart selektiert werden kann, dass entweder nur die elektromagnetische Strahlung eines oder mehrerer pn Übergänge erfasst wird und/oder dass sämtliches sichtbares Umgebungslicht geblockt wird,
- das gefilterte Strahlungsverhalten, oder im Bedarfsfall auch das ungefilterte Strahlungsverhalten, optisch erfasst und ausgewertet wird, wobei
das Strahlungsverhalten der Halbleiterschicht automatisch auf abrupte, im wesentlichen eindimensional ausgedehnte Intensitätsänderungen längs der Halbleiterschicht untersucht wird und detektierte Intensitätsänderungen als mechanische Defekte des Halbleiter-Bauelements gekennzeichnet werden und, optional,
- automatisch das Integral über die Strahlungsintensität zumindest eines ersten Teilbereichs einer ersten Halbleiterschicht bestimmt wird, anschließend das Integral über die Strahlungsintensität zumindest eines Vergleichsbereichs derselben Halbleiterschicht oder einer zweiten Halbleiterschicht bestimmt wird und aufgrund des Ergebnisses eines automatischen Vergleichs der beiden Integrale der erste Teilbereich als defekt oder als defektfrei gekennzeichnet wird.

Gemäß einer weiteren Ausführungsform der vorliegenden Erfindung kann beim optischen Erfassen ein Abschatten von direktem Auflicht auf eine Oberfläche des Halbleiter-Bauelements erfolgen. Dies bietet den Vorteil, dass lediglich elektromagnetische Strahlung erfasst und ausgewertet wird, die von dem Halbleiter-Bauelement emittiert wird, an dem die Durchlassspannung angelegt ist. Vom Bauteil reflektierte elektromagnetische Strahlung, die beispielsweise durch seitlich auf die Oberfläche des Halbleiter-Bauelements einfallendes Licht erzeugt wird, kann hierdurch vermieden werden.

Gemäß einer weiteren Ausführungsform der Erfindung kann das optische Erfassen innerhalb einer Zeitspanne von höchstens zwei Sekunden erfolgen. Es hat sich gezeigt, dass eine derartige Zeitspanne zur Aufnahme hochauflösender Bilder des auf Si basierenden Halbleiter-Bauelements für eine weitere Auswertung zur Detektion mittels einer herkömmlichen Si-CCD-Kamera geeignet ist.

Gemäß einer weiteren Ausführungsform der Erfindung kann zudem eine Spannung zum Betrieb des pn-Übergangs in Durchlassrichtung angelegt werden, die einen Strom in einem Bereich des ein- bis zweifachen einer Kurzschluss-Stromstärke des Halbleiter-Bauelements bewirkt. Auch hier hat sich gezeigt, dass eine derartige Spanne zur Aufnahme hochauflösender Bilder des auf Si basierenden Halbleiter-Bauelements für eine weitere Auswertung zur Detektion mittels einer herkömmlichen Si-CCD-Kamera geeignet ist.

Gemäß einer Ausführungsform der Erfindung kann das Halbleitermaterial mit indirektem Bandübergang Silizium, insbesondere polykristallines Silizium, umfassen.

Ferner kann gemäß einer weiteren Ausführungsform der vorliegenden Erfindung eine indirekte Detektion mechanischer Defekte einer strahlungsinaktiven Schicht des Halbleiter-Bauelements erfolgen, wobei das Strahlungsverhalten einer benachbarten strahlungsaktiven Halbleiterschicht automatisch auf abrupte, im wesentlichen eindimensional ausgedehnte Intensitätsänderungen längs der Halbleiterschicht untersucht wird und detektierte Intensitätsänderungen als mechanische Defekte der strahlungsinaktiven Schicht des Halbleiter-Bauelements gekennzeichnet werden. Insbesondere bei Tandem-Solarzellen (oder Solarzellen mit zwei oder mehreren aktiven Schichten) kann durch eine derartige Ausführungsform der vorliegenden Erfindung ein Bruch oder eine Degradationen von einer nicht-strahlenden Schicht des Halbleiter-Bauelements ebenfalls mittels des erfindungsgemäßen Ansatzes erkannt werden, da das Strahlungsverhalten des Halbleiter-Bauelements auch von diesem Bruch oder der Degradationen in der nicht-strahlenden Schicht beeinflusst wird.

Außerdem kann gemäß einer weiteren Ausführungsform der Erfindung eine kombinierte Detektion von mechanischen Defekten und Erfassung der elektrischen Auswirkungen der mechanischen Defekte erfolgen, wobei eine Analyse des Strahlungsverhaltens des Bauelements in einem ersten Wellenlängenbereich der Detektion mechanischer Defekte und eine Analyse des Strahlungsverhaltens des Bauelements in einem zweiten Wellenlängenbereich der Erfassung der elektrischen Auswirkungen zu Grunde gelegt wird. Hierdurch lässt sich vorteilhaft ausnutzen, dass auch nicht-aktive Schichten das Strahlungsverhalten des Halbleiter-Bauelements beeinflussen und somit auch durch die Analyse des Strahlungsverhaltens des Halbleiter-Bauelements diese nicht-aktiven Schichten auf mechanische Defekte untersucht werden können.

Gemäß einer weiteren Ausführungsform der vorliegenden Erfindung kann eine Mehrzahl von n Halbleiter-Bauelementen in einer Serienschaltung und/oder Parallelschaltung auf einem gemeinsamen Bauelemente-Träger angeordnet sein und an die Gesamtheit der Halbleiter-Bauelemente eine Spannung angelegt werden, die in Serienschaltung dem n-fachen der Spannung und in Parallelschaltung dem n-fachen Strom zum Betrieb eines Bauelementes in Durchlassrichtung entspricht. Dadurch können insbesondere bereits vormontierte Solarzellen-Panels oder -Module mit mehreren einzelnen in Reihe geschalteten Zellen inspiziert werden.

Gemäß einer weiteren Ausführungsform der Erfindung kann eine Anordnung zur Detektion mechanischer Defekte eines Halbleiter-Bauelements, insbesondere einer Solarzelle oder Solarzellen-Anordnung, vorgesehen sein mit zumindest einem pn-Übergang in einem Halbleitermaterial mit indirektem Bandübergang und mindestens einer Elektrode, die mit dem p-leitenden Bereich des Halbleiter-Bauelements verbunden ist und mindestens einer Elektrode, die mit dem n-leitenden Bereich des Halbleiter-Bauelements verbunden ist, mit:
- Spannungsversorgungsanschlüssen, die mit den Elektroden des HalbleiterBauelements verbunden sind, um eine Spannungsversorgung zum Betrieb des pn-Übergangs in Durchlassrichtung zu ermöglichen,
- einer Einrichtung zur optischen Erfassung und Auswertung des durch eine angelegte Spannung erzeugte Strahlungsverhalten der Halbleiterschicht zumindest für Teilbereiche der Halbleiterschicht, wobei die Anordnung folgende Merkmale umfasst:
- eine Filtereinheit, die so gewählt wird, nur die Strahlung einer oder mehrerer pn Übergänge zu detektieren und/oder sichtbares Umgebungslicht zu blockieren,
- einen Bilddaten-Speicherbereich zur Speicherung eines Strahlungsbildes einer Halbleiterschicht,
einen ersten Programm-Speicherbereich enthaltend ein Bildverarbeitungsprogramm, ausgebildet zur automatischen Untersuchung
- mindestens eines der Strahlungsbilder auf abrupte, im wesentlichen eindimensional ausgedehnte Intensitätsänderungen und zur Kennzeichnung der detektierten Intensitätsänderungen als mechanische Defekte des Halbleiter-Bauelements und
- einen zweiten Programm-Speicherbereich enthaltend ein Programm zur Analyse mindestens eines der Strahlungsbilder auf elektrische Auswirkungen der mechanischen Defekte.

Die Einrichtung zur optischen Erfassung umfasst ferner eine Einrichtung zum Abschatten von direktem Auflicht auf eine Oberfläche des Halbleiter-Bauelements, da die Detektion der vom Halbleiter-Bauelement emittierten Strahlung durch Reflexionen von seitlich auf eine Oberfläche des Halbleiter-Bauelements einfallenden Lichts negative beeinflusst werden kann.

Ferner kann auch in einer weiteren Ausführungsform der vorliegenden Erfindung die Einrichtung zum optischen Erfassen ausgebildet sein, das optische Erfassen innerhalb einer Zeitspanne von höchstens zwei Sekunden durchzuführen.

Gemäß einer weiteren Ausführungsform der Erfindung kann die Spannungsversorgung ausgebildet sein, um über die Spannungsversorgungsanschlüsse eine Spannung zum Betrieb des pn-Übergangs in Durchlassrichtung anzulegen, die einen Strom in einem Bereich des etwa ein- bis zweifachen einer Kurzschluss-Stromstärke des Halbleiter-Bauelements bewirkt.

Schließlich ist gemäß einer Ausführungsform der Erfindung die Verwendung einer Anordnung nach der Erfindung zur insbesondere automatischen Detektion mechanischer Defekte von Solarzellen-Anordnungen vorgesehen.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendet Begriffe und zugeordneten Bezugszeichen verwendet.

Die Zeichnungen zeigen in:
- Fig. 1: ein Diagramm eines prinzipiellen Aufbaus zur Detektion mechanischer Defekte in einem Halbleiter-Bauelement gemäß einem Ausführungsbeispiel der vorliegenden Erfindung;
- Fig. 2: eine prinzipielle Darstellung des Strahlungsverhaltens eines defekten Halbleiter-Bauelements von dessen Oberfläche;
- Fig. 3: ein beispielhaftes Foto einer defekten Silizium-Solarzelle unter Verwendung eines Ausführungsbeispiels des erfindungsgemäßen Ansatzes spricht.
- Fig. 4: eine schematische Darstellung einer Anordnung von mehreren Solarzellen zu einem String gemäß einem Ausführungsbeispiel der vorliegenden Erfindung;
- Fig. 5: eine schematische Darstellung einer Bildverarbeitungseinrichtung; und
- Fig. 6: ein Ablaufdiagramm eines Ausführungsbeispiels des erfindungsgemäßen Verfahrens.

Im Folgenden können gleiche und/oder funktional gleiche Elemente mit den gleichen Bezugszeichen versehen sein. Die im Folgenden angegebenen absoluten Werte und Maßangaben sind nur beispielhafte Werte und stellen keine Einschränkung der Erfindung auf derartige Dimensionen dar.

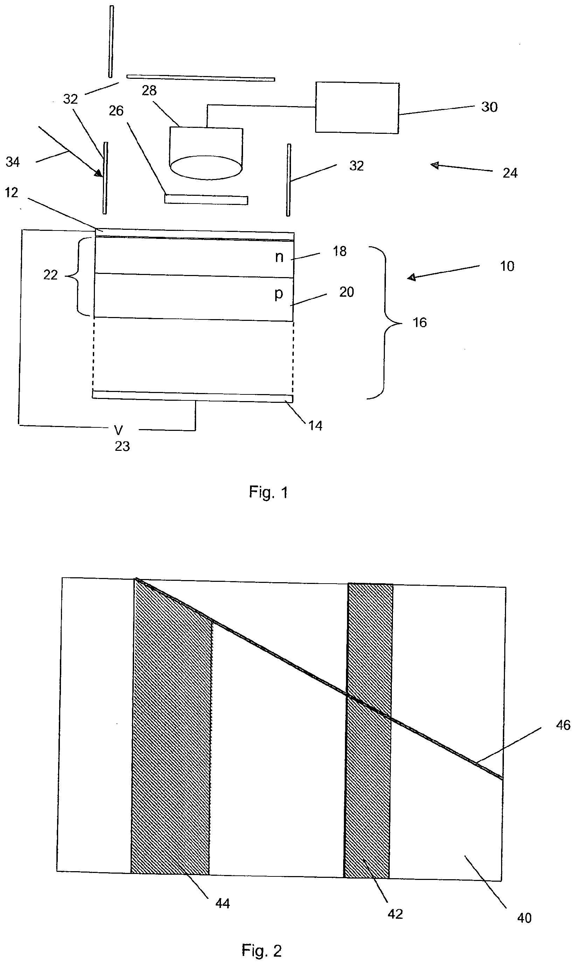

In Fig. 1 ist ein Diagramm eines prinzipiellen Aufbaus zur Detektion mechanischer Defekte in einem Halbleiter-Bauelement gemäß einem Ausführungsbeispiel der vorliegenden Erfindung dargestellt. Fig. 1 zeigt dabei ein Halbleiter-Bauelement 10, das eine obere Elektrode 12, eine untere Elektrode 14 sowie ein dazwischen liegendes Halbleitermaterial 16 umfasst. Das Halbleitermaterial 16 kann dabei ein Halbleitermaterial mit einem indirekten Bandübergang wie beispielsweise Silizium (Si) oder Germanium (Ge) sein. In diesem Halbleitermaterial 16 ist eine n-dotierte Schicht 18 über einer p-dotierten Schicht 20 angeordnet. Hierdurch wird ein pn-Übergang 22 gebildet. Weiterhin können, wie jedoch in Fig. 1 nicht dargestellt ist, zwischen dem pn-Übergang 22 und der unteren Elektrode 14 weitere Schichten, wie beispielsweise ein weiterer pn-Übergang oder andere, nicht-aktive HalbleiterSchichten angeordnet sein, die entweder auch aus dem gleichen Halbleitermaterial oder anderem Halbleitermaterial (einschließlich einer anderen Kristallstruktur des ursprünglichen Halbleitermaterials) bestehen. Eine umgekehrte Anordnung der Dotierungsprofile ist ebenso möglich, d.h. eine p-dotierte Schicht liegt über einer n-dotierten Schicht. Weiterhin kann zwischen die obere Elektrode 12 und die untere Elektrode 14 eine Spannung V 23 angelegt werden.

Ferner zeigt Fig. 1 eine Aufnahmeeinheit 24, die zum Beispiel ein InfrarotFilter 26, einen optischen Sensor wie z.B. eine CCD-Kamera 28 (mit vorgeschalteter Optik) sowie eine mit dem optischen Sensor (CCD-Kamera) 28 verbundene Bildauswertungseinheit 30 aufweist. Außerdem zeigt Fig. 1 seitliche Blenden 32, die ausgebildet sind, um seitliches Licht 34 von einer Oberfläche des Halbleiter-Bauelements 10 (das heißt beispielsweise von der oberen Oberfläche der oberen Elektrode 12) abzuschirmen.

Wird nun für das Halbleiter-Bauelement 10 eine Solarzellenanordnung verwendet, so kann ein technischer Effekt verwendet werden, gemäß dem eine Solarzelle nicht nur Strom bei Lichteinfall erzeugt, sondern auch elektromagnetische Strahlung abgibt (bzw. Elektrolumineszenz auftritt), wenn eine Spannung 23 zwischen der oberen Elektrode 12 und der unteren Elektrode 14 derart angelegt wird, dass der pn-Übergang 22 im Durchlassrichtung betrieben wird. Dieser Effekt tritt zwar vor allem bei der Verwendung von Halbleitermaterialien mit direktem Bandübergang auf (strahlende Rekombination der Ladungsträger), jedoch konnte auch festgestellt werden, dass in Materialien mit indirektem Bandübergang eine (wesentlich schwächere) Elektrolumineszenz auftritt, deren Intensität proportional zur Minoritätsträgerdiffusionslänge ist.

Brüche bzw. Defekte im Halbleiterbauelement beeinflussen zwar auch die Minoritätsträgerdiffusionslänge. Für das hier vorgeschlagene Verfahren ist aber insbesondere entscheidend, dass Brüche bzw. Defekte als Stromsenken wirken und, verbunden mit der Querleitfähigkeit der Zelle, die laterale Stromverteilung und damit die räumliche Verteilung der Elektrolumineszenz der Zelle makroskopisch beeinflussen, wie in der Veröffentlichung "Utilizing lateral current spreading in multijunction solar cells: An alternative approach to detecting mechanical defects", C. G. Zimmermann, J. Appl. Phys. 100, 023714, 2006 dargestellt. Somit lässt sich aus der Detektion der räumlichen Verteilung der emittierten Elektrolumineszenz auf solche Brüche bzw. Defekte schließen.

Bei den auf Si und Ge basierenden Halbleiterbauelementen ist anzumerken, dass diese Elektrolumineszenz im infraroten Spektralbereich (d.h. elektromagnetische Strahlung mit mehr als 800 nm Wellenlänge) erfolgt. Um daher elektromagnetische Strahlung anderer Spektralbereiche auszublenden, wird bei der Aufnahmeeinheit 24 ein Infrarotfilter 26 verwendet, um die Empfindlichkeit des Aufnahmesensors 28, der beispielsweise wie in Fig. 1 dargestellt eine herkömmliche Si-CCD-Kamera sein kann, speziell auf den interessierenden Spektralbereich zu fokussieren und die störenden anderen Spektralbereiche auszublenden. Die seitlichen Blenden 32 verhindern dann, dass der Infrarotanteil seitlich einfallenden Lichtes 34 von der Oberfläche des Halbleiter-Bauelements 10 in die Aufnahmeeinheit 28 reflektiert wird, was eine Verfälschung des aufgenommenen Bildes verursachen würde.

Die Aufnahmeeinheit 28 kann optional auch mit anderen Filterkombinationen versehen werden, um selektiv die Elektrolumineszenz eines oder mehrerer pn Übergange zu detektieren.

Fig. 2 zeigt eine schematische Darstellung, wie eine Aufnahme der in Fig. 1 dargestellten Oberfläche des Halbleiter-Bauelements 10 aussehen könnte. Der Bruch 46 im pn Übergang 22 tritt als im wesentlichen eindimensionale Intensitätsabnahme der Elektrolumineszenzstrahlung der Zelle (helle Bereiche 40) klar erkennbar hervor. In Fig. 2 ist der Bruch dementsprechend als schwarze Linie dargestellt. Dabei besteht auch die Möglichkeit, dass beispielsweise in einer unter dem pn-Übergang 22 angeordneten (nicht-aktiven) Schicht der Bruch 46 verläuft und sich dieser Bruch negativ auf die Kristallstruktur im pn-Übergang 22 auswirkt, so dass auch ein Bruch in einer nicht-aktiv Schicht mit dem vorgeschlagenen Ansatz erkannt werden kann. Diese abrupten im wesentlichen eindimensionalen Intensitätsänderungen erlauben sehr leicht ein automatisches Erkennen von Defekten durch geläufige Bildverarbeitungssysteme. Darüber hinaus ermöglicht das hier vorgeschlagene Verfahren auch, die mit einem Bruch verbunden elektrischen Effekte zu detektieren. So ist z.B. der komplette Bereich 42 durch den Bruch elektrisch beeinträchtigt und durch eine verminderte Elektrolumineszenz charakterisiert. In Bereich 44 ist das nur für den Bereich unterhalb des Bruches 46 der Fall. Mit dem vorgeschlagenen Verfahren kann das Strahlungsverhalten der Solarzellen-Anordnung auf einfache Weise optisch analysiert werden, so dass direkt, eindeutig und reproduzierbar auf Defekte in der Solarzellen-Anordnung geschlossen werden kann.

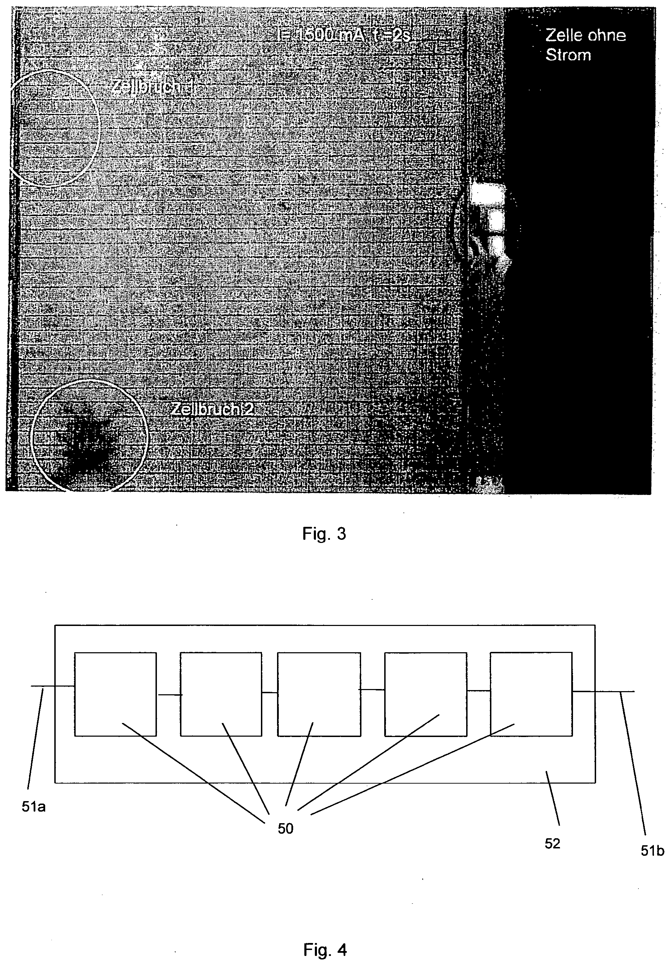

Fig. 3 stellt ein exemplarisches Foto eines solchen Elektrolumineszenz-Bildes einer Silizium-Solarzelle dar, bei der eine entsprechende Spannung zum Betrieb der jeweiligen pn-Übergänge in Durchlassrichtung angelegt wurde. Dabei wurde die Solarzelle mit einem Strom von I=1500 mA über eine Zeitspanne von t=2 s beaufschlagt. So wurden unter den aufgeführten Parametern die mit "Zellbruch 1" und "Zellbruch 2" bezeichneten Zellenbrüche in hoher Auflösung sichtbar. Am rechten Rand befindet sich zum Vergleich eine Solarzelle ohne externen Vorwärtsstrom.

Die Fig. 4 zeigt mehrere zu einem String zusammengefasste Solarzellen-Anordnungen 50, die beispielsweise aus je einem Halbleiter-Bauelement 10 bestehen, wie es in Fig. 1 dargestellt ist. Dabei sind die einzelnen Solarzellen-Anordnungen 20 über ihre Elektroden 51a bzw. 51b in Serie geschaltet. Die Solarzellen-Anordnungen 50 sind auf einem gemeinsamen Träger 52 aufgebracht. Legt man nun an diesen gesamten String eine Spannung an, die bei n Solarzellen-Anordnung 50 das n-fache der Spannung beträgt, um eine Solarzellen-Anordnung 50 in Durchlassrichtung zu schalten, so kann der gesamte String von Solarzellen in einem Arbeitsgang getestet werden.

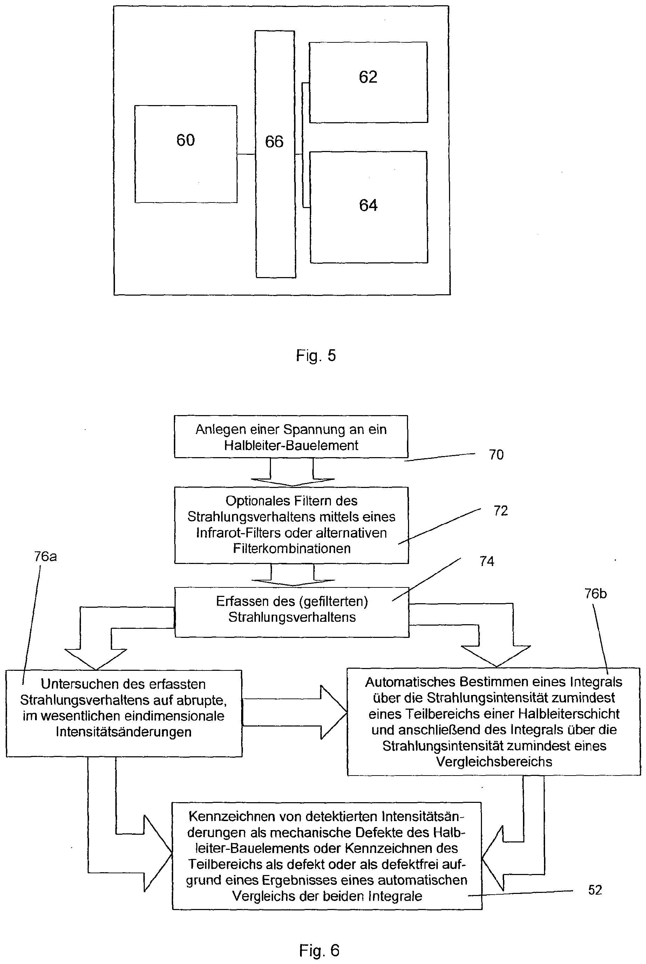

Fig. 5 zeigt schematisch ein Schaltbild mit den wesentlichen Funktionalitäten einer möglichen Ausgestaltung der Bildverarbeitungseinheit 30 im Detail. Diese Bildverarbeitungseinheit 30 hat einen Bilddaten-Speicherbereich 60 zur Speicherung eines Strahlungsbildes der Halbleiterschicht 10 (bzw. des pn-Übergangs 22), einem Programm-Speicherbereich 62 enthaltend ein Bildverarbeitungsprogramm, ausgebildet zur automatischen Untersuchung des Strahlungsbildes auf abrupte, im wesentlichen eindimensional ausgedehnte Intensitätsänderungen zur Kennzeichnung der detektierten Intensitätsänderungen als mechanische Defekte des Halbleiter-Bauelements und einen zweiten Programm-Speicherbereich 64 enthaltend ein Programm zur Analyse des Strahlungsbildes aufs elektrische Auswirkungen der mechanischen Defekte. Die beiden Programme können von einer Rechnereinheit 66 ausgeführt werden, die mit den einzelnen Speicherbereichen 60 bis 64 datentechnisch verbunden ist.

Fig. 6 zeigt ein Ablaufdiagramm eines Ausführungsbeispiels des erfindungsgemäßen Verfahrens. Dabei wird in einem ersten Verfahrensschritt 70 an einen pn-Übergang des Halbleiter-Bauelements (mit mindestens einem pn-Übergang in einem Halbleitermaterial mit indirektem Bandübergang) eine Spannung in Durchlassrichtung des pn-Übergangs angelegt. In einem zweiten Verfahrensschritt 72 wird das durch die angelegte Spannung erzeugte Strahlungsverhalten der Halbleiterschicht im Falle eines Si-Halbleiterbauelements zumindest für Teilbereiche der Halbleiterschicht mittels eines Infrarot-Filters derart gefiltert, dass eine elektromagnetische Strahlung im Spektralbereich mit einer niedrigeren Wellenlänge als Infrarot geblockt wird. Im allgemeinen Fall können andere Filterkombinationen sinnvoll sein. Anschließend wird das gefilterte Strahlungsverhalten in einem dritten Verfahrensschritt 74 optisch erfasst, beispielsweise mittels einer CCD-Kamera. Schließlich wird das erfasste Strahlungsverhalten in einem letzten Verfahrenschritt 76a ausgewertet, wobei das Strahlungsverhalten der Halbleiterschicht automatisch auf abrupte, im wesentlichen eindimensional ausgedehnte Intensitätsänderungen längs der Halbleiterschicht untersucht wird und detektierte Intensitätsänderungen als mechanische Defekte des Halbleiter-Bauelements gekennzeichnet werden (Verfahrensschritt 78). Zusätzlich kann auch in einem weiteren Verfahrensschritt 76b automatisch das Integral über die Strahlungsintensität zumindest eines ersten Teilbereichs einer ersten Halbleiterschicht bestimmt werden, anschließend das Integral über die Strahlungsintensität zumindest eines Vergleichsbereichs derselben Halbleiterschicht oder einer zweiten Halbleiterschicht bestimmt werden und aufgrund des Ergebnisses eines automatischen Vergleichs der beiden Integrale der erste Teilbereich als defekt oder als defektfrei gekennzeichnet werden (Verfahrensschritt 78).

Zusammenfassend ist anzumerken, dass beispielsweise mittels einer herkömmlichen CCD-Kamera (wie der kommerziell erhältlichen Si-CCD-Kamera Sony XCD-SX910) und eines Infrarotfilters gezeigt werden konnte, dass durch Anlegen eines Stroms, beispielsweise in der Größenordnung von 1-2 x Isc (= Kurzschlussstrom der Zelle) und Belichtungszeiten von 1-2 s hochauflösende Bilder der Zellbrüche in Silizium-Solarzellen gemacht werden können, wie aus Fig. 3 ersichtlich ist. Die gewählten Parameter ermöglichen dabei eine gute Kompatibilität des Verfahrens mit den Anforderungen der Produktion: der gewählte Strombereich ist unkritisch für die Zelle und schädigt diese nicht. Die Belichtungszeiten von 1-2 s sichern eine schnelle Inspektion aller Zellen. Die Kamera verwendet einen Standard-Si-CCD-Detektor und ist damit preisgünstig, zumal auch keine zusätzlichen Maßnahmen, wie etwa Kühlung der Kamera, erforderlich sind. Sichtbares Umgebungslicht wird durch den Infrarotfilter geblockt, lediglich eine Abschattung von direktem Auflicht auf die Zelle kann erfolgen.

### Bezugszeichen

- 10: Halbleiter-Bauelement
- 12: obere Elektrode
- 14: untere Elektrode
- 16: Halbleitermaterial
- 18: n-dotierte Schicht
- 20: p-dotierte Schicht
- 22: pn-Übergang
- 23: Spannung V zum Betreiben des Halbleiter-Bauelements in Durchlassrichtung
- 24: Aufnahmeeinheit
- 26: Infrarot-Filter
- 28: optischer Sensor, CCD-Kamera
- 30: Auswerteeinheit
- 32: seitliche Blenden
- 34: seitliches Licht, Auflicht
- 40,: lumineszierende Oberflächenbereiche des HalbleiterBauelements
- 42, 44: Bereiche des Halbleiters mit verminderter Elektrolumineszenz
- 46: Bruch, mechanischer Defekt
- 50: Halbleiter-Bauelemente in Modul-Anordnung
- 51a, 51b: Anschlusselektroden des Moduls
- 52: Bauelemente-Träger
- 60: Bilddaten-Speicherbereich
- 62: erster Programm-Speicherbereich
- 64: zweiter Programm-Speicherbereich
- 66: Rechnereinheit
- 70: Schritt des Anlegens einer Spannung an das HalbleiterBauelement
- 72: Schritt des Filterns des Strahlungsverhaltens mittels eines Infrarot-Filters
- 74: Erfassen des gefilterten Strahlungsverhaltens
- 76a: Untersuchen des erfassten Strahlungsverhaltens auf abrupte, im wesentlichen eindimensionale Intensitätsänderungen
- 76b: Automatisches Bestimmen eines Integrals über die Strahlungsintensität zumindest eines ersten Teilbereichs einer ersten Halbleiterschicht und anschließend des Integrals über die Strahlungsintensität zumindest eines Vergleichsbereichs derselben Halbleiterschicht oder einer zweiten Halbleiterschicht
- 78: Kennzeichnen von detektierten Intensitätsänderungen als mechanische Defekte des Halbleiter-Bauelements oder Kennzeichnen des ersten Teilbereichs als defekt oder als defektfrei aufgrund eines Ergebnisses eines automatischen Vergleichs der beiden Integrale

## Patentansprüche

1. Verfahren zur Detektion mechanischer Defekte eines auf Silizium oder Germanium basierenden Halbleiter-Bauelements (10), insbesondere einer Solarzelle oder Solarzellen-Anordnung, mit zumindest einem pn-Übergang (22) in einer Halbleiterschicht eines Halbleitermaterials (16) mit indirektem Bandübergang, wobei
- an den zumindest einen pn-Übergang (22) eine Spannung (23) zum Betrieb des pn-Übergangs (22) in Durchlassrichtung angelegt wird (70),
- das durch die angelegte Spannung (23) erzeugte Strahlungsverhalten der Halbleiterschicht zumindest für Teilbereiche der Halbleiterschicht optisch erfasst (74) und ausgewertet (76) wird, wobei
- das Strahlungsverhalten der Halbleiterschicht automatisch auf abrupte, im wesentlichen eindimensional ausgedehnte Intensitätsänderungen längs der Halbleiterschicht untersucht wird (76a) und detektierte Intensitätsänderungen als mechanische Defekte (46) des Halbleiter-Bauelements (10) gekennzeichnet werden (78),
**dadurch gekennzeichnet, dass**
zur optischen Erfassung des Strahlungsverhaltens der Halbleiterschicht ein Infrarot-Filter (26) zum Einsatz kommt (72), so dass eine elektromagnetische Strahlung im Spektralbereich mit einer niedrigeren Wellenlänge als Infrarot geblockt wird, und/oder die Elektrolumineszenz einer oder mehrerer pn Übergänge mittels auf das Halbleitermaterial angepassten Filterkombinationen ausgewählt werden.

2. Verfahren nach Anspruch 1, **dadurch gekennzeichnet, dass** automatisch das Integral über die Strahlungsintensität zumindest eines ersten Teilbereichs (44, 42) einer ersten Halbleiterschicht bestimmt wird, anschließend das Integral über die Strahlungsintensität zumindest eines Vergleichsbereichs derselben Halbleiterschicht (44, 42) oder einer zweiten Halbleiterschicht (42, 40) bestimmt wird (76b) und aufgrund des Ergebnisses eines automatischen Vergleichs der beiden Integrale der erste Teilbereich (44) als defekt oder als defektfrei gekennzeichnet wird (78).

3. Verfahren nach einem der Ansprüche 1 oder 2,
**dadurch gekennzeichnet, dass**
beim optischen Erfassen (74) ein Abschatten von direktem Auflicht (34) auf eine Oberfläche des Halbleiter-Bauelements (10) erfolgt.

4. Verfahren nach einem der Ansprüche 1 bis 3,
**dadurch gekennzeichnet, dass**
das optische Erfassen (74) innerhalb einer Zeitspanne von höchstens zwei Sekunden erfolgt.

5. Verfahren nach einem der Ansprüche 1 bis 4,
**dadurch gekennzeichnet, dass**
eine Spannung (23) zum Betrieb des pn-Übergangs (22) in Durchlassrichtung angelegt wird, die einen Strom in einem Bereich des etwa ein- bis zweifachen einer Kurzschluss-Stromstärke des Halbleiter-Bauelements (10) bewirkt.

6. Verfahren nach einem der Ansprüche 1 bis 5,
**dadurch gekennzeichnet, dass**
das Halbleitermaterial (16) mit indirektem Bandübergang Silizium, insbesondere polykristallines Silizium, umfasst.

7. Verfahren nach einem der Ansprüche 1 bis 6,
**dadurch gekennzeichnet, dass**
eine indirekte Detektion mechanischer Defekte einer strahlungsinaktiven Schicht des Halbleiter-Bauelements (10) erfolgt, wobei das Strahlungsverhalten einer benachbarten strahlungsaktiven Halbleiterschicht automatisch auf abrupte, im wesentlichen eindimensional ausgedehnte Intensitätsänderungen längs der Halbleiterschicht untersucht wird und detektierte Intensitätsänderungen als mechanische Defekte (46) der strahlungsinaktiven Schicht des Halbleiter-Bauelements (10) gekennzeichnet werden.

8. Verfahren nach einem der Ansprüche 1 bis 7,
**dadurch gekennzeichnet, dass**
eine kombinierte Detektion von mechanischen Defekten (46) und Erfassung der elektrischen Auswirkungen der mechanischen Defekte erfolgt, wobei eine Analyse des Strahlungsverhaltens des Halbleiter-Bauelements (10) in einem ersten Wellenlängenbereich der Detektion mechanischer Defekte und eine Analyse des Strahlungsverhaltens des Halbleiter-Bauelements (10) in einem zweiten Wellenlängenbereich der Erfassung der elektrischen Auswirkungen zu Grunde gelegt wird.

9. Verfahren nach einem der Ansprüche 1 bis 8,
**dadurch gekennzeichnet, dass**
eine Mehrzahl von n Halbleiter-Bauelementen (50, 10) in einer Serienschaltung auf einem gemeinsamen Bauelemente-Träger (52) angeordnet wird und an die Gesamtheit der Halbleiter-Bauelemente (50, 10) eine Spannung angelegt wird, die dem n-fachen der Spannung (23) zum Betrieb eines Halbleiter-Bauelementes (10) in Durchlassrichtung entspricht.

10. Verfahren nach einem der Ansprüche 1 bis 8,
**dadurch gekennzeichnet, dass**
eine Mehrzahl von n Halbleiter-Bauelementen (10) in einer Parallelschaltung auf einem gemeinsamen Bauelemente-Träger angeordnet wird und an die Gesamtheit der Halbleiter-Bauelemente (10) eine Spannung angelegt wird, die den n-fachen Strom zum Betrieb eines Halbleiter-Bauelementes (10) in Durchlassrichtung bewirkt.

11. Anordnung zur Durchführung des Verfahrens nach einem der Ansprüche 1 bis 10 zur Detektion mechanischer Defekte eines auf Silizium oder Germanium basierenden Halbleiter-Bauelements (10), insbesondere einer Solarzelle oder Solarzellen-Anordnung, mit zumindest einem pn-Übergang (22) in einer Halbleiterschicht eines Halbleitermaterials (16) mit indirektem Bandübergang und mindestens einer Elektrode (14), die mit dem p-leitenden Bereich (20) des HalbleiterBauelements (10) verbunden ist und mindestens einer Elektrode (12), die mit dem n-leitenden Bereich (18) des Halbleiter-Bauelements (10) verbunden ist, mit:
- Spannungsversorgungsanschlüssen, die mit den Elektroden (12, 14) des Halbleiter-Bauelements (10) verbunden sind, um eine Spannungsversorgung (V, 23) zum Betrieb des pn-Übergangs (22) in Durchlassrichtung zu ermöglichen,
- einer Einrichtung (24) zur optischen Erfassung und Auswertung des durch eine angelegte Spannung erzeugten Strahlungsverhaltens der Halbleiterschicht zumindest für Teilbereiche der Halbleiterschicht, einem Bilddaten-Speicherbereich (60) zur Speicherung eines Strahlungsbildes der Halbleiterschicht,
- einem ersten Programm-Speicherbereich (62) enthaltend ein Bildverarbeitungsprogramm, ausgebildet zur automatischen Untersuchung des Strahlungsbildes auf abrupte, im wesentlichen eindimensional ausgedehnte Intensitätsänderungen und zur Kennzeichnung der detektierten Intensitätsänderungen als mechanische Defekte (46) des Halbleiter-Bauelements (10) und
- einem zweiten Programm-Speicherbereich (64) enthaltend ein Programrr ausgebildet zur Analyse des Strahlungsbildes auf elektrische Auswirkungen der mechanischen Defekte, wobei
- die Einrichtung (24) zur optischen Erfassung und Auswertung des durch eine angelegte Spannung erzeugten Strahlungsverhaltens der Halbleiterschicht eine Filtereinheit (26) umfasst, **dadurch gekennzeichnet, dass** die Filtereinheit derart ausgebildet ist, dass eine elektromagnetische Strahlung im Spektralbereich mit einer niedrigeren Wellenlänge als Infrarot geblockt wird und/oder die derart ausgebildet ist, die Strahlung eines oder mehrer pn Übergänge zu isolieren,
dass die Einrichtung (24) zur optischen Erfassung eine Einrichtung (34) zum Abschatten von direktem Auflicht auf eine Oberfläche des Halbleiter-Bauelements umfasst, und
dass die Einrichtung (24) zur optischen Erfassung und Auswertung derart ausgebildet ist, das Strahlungsverhalten der Halbleiterschicht eines Halbleitermaterials mit indirektem Bandübergang zu erfassen.

12. Anordnung nach Anspruch 11,
**dadurch gekennzeichnet, dass**
die Einrichtung (24) zum optischen Erfassen ausgebildet ist, das optische Erfassen innerhalb einer Zeitspanne von höchstens zwei Sekunden durchzuführen.

13. Anordnung nach einem der Ansprüche 11 oder 12,
**dadurch gekennzeichnet, dass**
die Spannungsversorgung (V,23) ausgebildet ist, um über die Spannungsversorgungsanschlüsse eine Spannung (23) zum Betrieb des pn-Übergangs (22) in Durchlassrichtung anzulegen, die einen Strom in einem Bereich des etwa ein- bis zweifachen einer Kurzschluss-Stromstärke des Halbleiter-Bauelements (10) bewirkt.

14. Verwendung einer Anordnung nach einem der Ansprüche 11 bis 13 zur Durchführung des Verfahrens nach einem der Ansprüche 1 bis 10 zur Detektion mechanischer Defekte eines Halbleiter-Bauelements, insbesondere zur automatischen Detektion mechanischer Defekte von Solarzellen-Anordnungen.

## Claims

1. A method for detecting mechanical defects of a Silicon or Germanium based semiconductor device (10), in particular a solar cell or solar cell arrangement, having at least one pn-junction (22) in a semiconductor layer formed of a semiconductor material (16) with an indirect band junction, wherein
- a voltage (23) is applied (70) to the at least one pn-junction (22) for operating the pn-junction (22) in a transmitting direction,
- the radiation behavior of the semiconductor layer generated by the applied voltage (23) is optically detected (74) and analyzed (76) at least for partial regions of the semiconductor layer, wherein
- the radiation behavior of the semiconductor layer is automatically examined (76a) for abrupt, substantially one-dimensional changes of intensity along the semiconductor layer, and detected changes of intensity are identified (78) as mechanical defects (46) of the semiconductor device (10),
**characterized in that**
an infrared filter (26) is used (72) for optically detecting the radiation behavior of the semiconductor layer, so that electromagnetic radiation in the spectral range with a wavelength lower than infrared is blocked, and/or the electroluminescence of one or more pn-junctions is selected by means of filter combinations adapted to the semiconductor material.

2. The method according to claim 1, **characterized in that** the integral over the radiation intensity of at least a first partial region (44, 42) of a first semiconductor layer is automatically determined, subsequently the integral over the radiation intensity of at least one comparison region of the same semiconductor layer (44, 42) or of a second semiconductor layer (42, 40) is determined (76b), and on the basis of the result of an automatic comparison of the two integrals, the first partial region (44) is characterized (78) as defective or as defect-free.

3. The method according to one of claims 1 or 2,
**characterized in that**
during optically detecting (74), shading of direct incident light (34) onto a surface of the semiconductor device (10) occurs.

4. The method according to any one of claims 1 to 3,
**characterized in that**
the optically detecting (74) takes place within a time period of no more than two seconds.

5. The method according to any one of claims 1 to 4,
**characterized in that**
a voltage (23) for operating the pn-junction (22) in the transmitting direction is applied, which causes a current in a range of about one to two times a short-circuit current intensity of the semiconductor device (10).

6. The method according to any one of claims 1 to 5,
**characterized in that**
the semiconductor material (16) with an indirect band junction comprises silicon, in particular polycrystalline silicon.

7. The method according to any one of claims 1 to 6,
**characterized in that**
an indirect detection of mechanical defects of a radiation-inactive layer of the semiconductor device (10) takes place, wherein the radiation behavior of an adjacent radiation-active semiconductor layer is automatically examined for abrupt, substantially one-dimensional changes of intensity along the semiconductor layer and detected changes of intensity are identifies as mechanical defects (46) of the radiation-inactive layer of the semiconductor device (10).

8. The method according to any one of claims 1 to 7,
**characterized in that**
a combined detection of mechanical defects (46) and detection of the electrical effects of the mechanical defects is performed, wherein an analysis of the radiation behavior of the semiconductor device (10) in a first wavelength range is used as a basis for the detection of mechanical defects and an analysis of the radiation behavior of the semiconductor device (10) in a second wavelength range is used as a basis for the detection of the electrical effects.

9. The method according to any one of claims 1 to 8,
**characterized in that**
a plurality of n semiconductor devices (50, 10) is arranged in series on a common device carrier (52), and a voltage corresponding to n times the voltage (23) for operating a semiconductor device (10) in the transmitting direction is applied to the entirety of the semiconductor devices (50, 10).

10. The method according to any one of claims 1 to 8,
**characterized in that**
a plurality of n semiconductor devices (10) is arranged in parallel on a common device carrier, and a voltage is applied to the entirety of the semiconductor devices (10) which causes n times the current to operate a semiconductor device (10) in the transmitting direction.

11. An arrangement for performing the method according to anyone of claims 1 to 10 for detecting mechanical defects of a Silicon or Germanium based semiconductor device (10), in particular a solar cell or solar cell arrangement, having at least one pn-junction (22) in a semiconductor layer of a semiconductor material (16) with an indirect band junction and at least one electrode (14) which is connected to the p-conducting region (20) of the semiconductor device (10) and at least one electrode (12) which is connected to the n-conducting region (18) of the semiconductor device (10), having:
- voltage supply terminals connected to the electrodes (12, 14) of the semiconductor device (10) to enable a voltage supply (V, 23) to operate the pn-junction (22) in the transmitting direction,
- a device (24) for optically detecting and evaluating the radiation behavior of the semiconductor layer generated by an applied voltage at least for partial regions of the semiconductor layer,
- an image data storage area (60) for storing a radiation image of the semiconductor layer,
- a first program memory area (62) containing an image processing program adapted to automatically examine the radiation image for abrupt, substantially one-dimensional changes of intensity and to identify the detected changes of intensity as mechanical defects (46) of the semiconductor device (10), and
- a second program memory area (64) containing a program adapted to analyze the radiation image for electrical effects of the mechanical defects, wherein
- the device (24) for optically detecting and evaluating the radiation behavior of the semiconductor layer generated by an applied voltage comprises a filter unit (26),
**characterized in that** the filter unit is designed such that electromagnetic radiation in the spectral range with a wavelength lower than infrared is blocked and/or designed so as to isolate the radiation of one or more pn-transitions, that the device (24) for optically detecting comprises a device (34) for shading direct incident light onto a surface of the semiconductor device (10), and that the device (24) for optically detecting and evaluating is designed to detect the radiation behavior of the semiconductor layer of a semiconductor material with an indirect band junction.

12. The arrangement according to claim 11,
**characterized in that**
the device (24) for optically detecting is designed to perform the optically detecting within a time period of no more than two seconds.

13. The arrangement according to any one of claims 11 or 12,
**characterized in that**
the voltage supply (V, 23) is adapted to apply, via the voltage supply terminals, a voltage (23) for operating the pn-junction (22) in the transmitting direction, which causes a current in a range of about one to two times a short-circuit current intensity of the semiconductor device (10).

14. Use of an arrangement according to anyone of claims 11 to 13 for performing the method according to anyone of claims 1 to 10 for detecting mechanical defects of a semiconductor device, in particular for automatically detecting mechanical defects of solar cell arrangements.

## Revendications

1. Procédé de détection de défauts mécaniques d'un composant semi-conducteur (10) à base de silicium ou de germanium, en particulier d'une cellule solaire ou d'un ensemble de cellules solaires, comportant au moins une jonction pn (22) dans une couche semi-conductrice d'un matériau semi-conducteur (16) à transition inter-bandes indirecte, dans lequel
- une tension (23) est appliquée (70) à ladite au moins une jonction pn (22) pour faire fonctionner la jonction pn (22) dans le sens direct,
- le comportement de rayonnement de la couche semi-conductrice produit par la tension appliquée (23) est détecté optiquement (74) et évalué (76) au moins pour des zones partielles de la couche semi-conductrice,
dans lequel le comportement de rayonnement de la couche semi-conductrice est inspecté automatiquement (76a) en ce qui concerne des variations d'intensité abruptes, d'extension essentiellement unidimensionnelle le long de la couche semi-conductrice, et les variations d'intensité détectées sont caractérisées (78) comme des défauts mécaniques (46) du composant semi-conducteur (10),
**caractérisé en ce qu'**un filtre infrarouge (26) est utilisé (72) pour la détection optique du comportement de rayonnement de la couche semi-conductrice, de telle sorte qu'un rayonnement électromagnétique dans le domaine spectral ayant une longueur d'onde inférieure à l'infrarouge est bloqué, et/ou que l'électroluminescence d'une ou de plusieurs jonctions pn est sélectionnée au moyen de combinaisons de filtres adaptées au matériau semi-conducteur.

2. Procédé selon la revendication 1,
**caractérisé en ce que** l'intégrale sur l'intensité de rayonnement d'au moins une première zone partielle (44, 42) d'une première couche semi-conductrice est déterminée automatiquement, ensuite l'intégrale sur l'intensité de rayonnement d'au moins une zone de comparaison de la même couche semi-conductrice (44, 42) ou d'une deuxième couche semi-conductrice (42, 40) est déterminée (76b) et, sur la base du résultat d'une comparaison automatique des deux intégrales, la première zone partielle (44) est caractérisée (78) comme étant défectueuse ou sans défaut.

3. Procédé selon l'une des revendications 1 ou 2,
**caractérisé en ce que** lors de la détection optique (74), une occultation de la lumière incidente directe (34) sur une surface du composant semi-conducteur (10) est effectuée.

4. Procédé selon l'une des revendications 1 à 3,
**caractérisé en ce que** la détection optique (74) a lieu dans un intervalle de temps de deux secondes au maximum.

5. Procédé selon l'une des revendications 1 à 4,
**caractérisé en ce que** pour faire fonctionner la jonction pn (22) dans le sens direct, on applique une tension (23) qui provoque un courant dans une plage d'environ une à deux fois une intensité du courant de court-circuit du composant semi-conducteur (10).

6. Procédé selon l'une des revendications 1 à 5,
**caractérisé en ce que** le matériau semi-conducteur (16) à transition inter-bandes indirecte comprend du silicium, en particulier du silicium polycristallin.

7. Procédé selon l'une des revendications 1 à 6,
**caractérisé en ce qu'**une détection indirecte de défauts mécaniques d'une couche inactive au rayonnement du composant semi-conducteur (10) est effectuée, dans lequel le comportement au rayonnement d'une couche semi-conductrice active au rayonnement adjacente est inspecté automatiquement en ce qui concerne des variations d'intensité abruptes, d'extension essentiellement unidimensionnelle le long de la couche semi-conductrice et les variations d'intensité détectées sont caractérisées comme des défauts mécaniques (46) de la couche inactive au rayonnement du composant semi-conducteur (10).

8. Procédé selon l'une des revendications 1 à 7,
**caractérisé en ce qu'**une détection combinée de défauts mécaniques (46) et des effets électriques des défauts mécaniques est effectuée, dans lequel une analyse du comportement de rayonnement du composant semi-conducteur (10) dans une première plage de longueurs d'onde est utilisée comme base pour la détection de défauts mécaniques et une analyse du comportement de rayonnement du composant semi-conducteur (10) dans une deuxième plage de longueurs d'onde est utilisée comme base pour la détection des effets électriques.

9. Procédé selon l'une des revendications 1 à 8,
**caractérisé en ce qu'**une pluralité de n composants semi-conducteurs (50, 10) est disposée en série sur un support de composants commun (52) et une tension correspondant à n fois la tension (23) pour faire fonctionner un composant semi-conducteur (10) dans le sens direct est appliquée à la totalité des composants semi-conducteurs (50, 10).

10. Procédé selon l'une des revendications 1 à 8,
**caractérisé en ce qu'**une pluralité de n composants semi-conducteurs (10) est disposée en parallèle sur un support de composants commun et une tension qui provoque n fois le courant pour faire fonctionner un composant semi-conducteur (10) dans le sens direct est appliquée à la totalité des composants semi-conducteurs (10).

11. Ensemble pour mettre en œuvre le procédé selon l'une des revendications 1 à 10 pour la détection de défauts mécaniques d'un composant semi-conducteur (10) à base de silicium ou de germanium, en particulier d'une cellule solaire ou d'un ensemble de cellules solaires, comportant au moins une jonction pn (22) dans une couche semi-conductrice d'un matériau semi-conducteur (16) à transition inter-bandes indirecte et au moins une électrode (14) qui est reliée à la zone de type p (20) du composant semi-conducteur (10) et au moins une électrode (12) qui est reliée à la zone de type n (18) du composant semi-conducteur (10), comprenant :
- des bornes d'alimentation en tension qui sont reliées aux électrodes (12, 14) du composant semi-conducteur (10) pour permettre une alimentation en tension (V, 23) pour faire fonctionner la jonction pn (22) dans le sens direct,
- un dispositif (24) de détection optique et d'évaluation du comportement de rayonnement de la couche semi-conductrice qui est produit par une tension appliquée, au moins pour des zones partielles de la couche semi-conductrice, une zone de mémoire de données d'image (60) pour mémoriser une image de rayonnement de la couche semi-conductrice,
- une première zone de mémoire de programme (62) contenant un programme de traitement d'image conçu pour inspecter automatiquement l'image de rayonnement en ce qui concerne des variations d'intensité abruptes, d'extension essentiellement unidimensionnelle, et pour caractériser les variations d'intensité détectées comme des défauts mécaniques (46) du composant semi-conducteur (10), et
- une deuxième zone de mémoire de programme (64) contenant un programme conçu pour analyser l'image de rayonnement en ce qui concerne les effets électriques des défauts mécaniques,
dans lequel le dispositif (24) de détection optique et d'évaluation du comportement du rayonnement de la couche semi-conductrice produit par une tension appliquée comprend une unité de filtrage (26),
**caractérisé en ce que** l'unité de filtrage est conçue de telle sorte qu'un rayonnement électromagnétique dans le domaine spectral ayant une longueur d'onde inférieure à l'infrarouge soit bloqué et/ou est conçue de telle sorte que le rayonnement d'une ou de plusieurs jonctions pn soit isolé,
**en ce que** le dispositif (24) de détection optique comprend un dispositif (34) pour occulter la lumière incidente directe sur une surface du composant semi-conducteur, et
**en ce que** le dispositif (24) de détection optique et d'évaluation est conçu de manière à détecter le comportement de rayonnement de la couche semi-conductrice d'un matériau semi-conducteur à transition inter-bandes indirecte.

12. Ensemble selon la revendication 11,
**caractérisé en ce que** le dispositif (24) de détection optique est conçu pour effectuer la détection optique dans un intervalle de temps de deux secondes au maximum.

13. Ensemble selon l'une des revendications 11 ou 12,
**caractérisé en ce que** l'alimentation en tension (V, 23) est conçue pour appliquer, par l'intermédiaire des bornes d'alimentation en tension, une tension (23) pour faire fonctionner la jonction pn (22) dans le sens direct, qui provoque un courant dans une plage d'environ une à deux fois une intensité du courant de court-circuit du composant semi-conducteur (10).

14. Utilisation d'un ensemble selon l'une des revendications 11 à 13 pour mettre en œuvre le procédé selon l'une des revendications 1 à 10 pour la détection de défauts mécaniques d'un composant semi-conducteur, en particulier pour la détection automatique de défauts mécaniques d'ensembles de cellules solaires.
